# EUROPÄISCHE PATENTANMELDUNG

(11) **EP 3 263 262 A1**
(43) Veröffentlichungstag der Anmeldung: **03.01.2018**
(21) Anmeldenummer: 17177954.9
(22) Anmeldetag: 26.06.2017
(51) Int. Cl.: B23F 5/16, F16H 49/00, B23F 17/00, B23F 23/00, B23F 21/10, B23F 5/02, B23Q 27/00

(54) **SPANNUNGSWELLENGETRIEBE UND VERFAHREN ZUM HERSTELLEN DER VERZAHNUNG EINES ZAHNRADES FÜR EIN SPANNUNGSWELLENGETRIEBE**

(30) Priorität: 27.06.2016 LU 93123
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe mit einem Circularspline (11), der eine Circularspline-Verzahnung (12) aufweist, und einem Flexspline (14), der eine Flexspline-Verzahnung (15) aufweist, wobei die Circularspline-Verzahnung und die Flexspline-Verzahnung miteinander in Zahneingriff stehen. Das Getriebe zeichnet sich dadurch aus, dass die Circularspline-Verzahnung und/oder die Flexspline-Verzahnung bezogen auf die Rotationsmittelachse (13) des Spannungswellengetriebes nicht achsensymmetrisch ausgebildet sind.

## Beschreibung

Die Erfindung betrifft ein Spannungswellengetriebe mit einem Circularspline, der eine Circularspline-Verzahnung aufweist, und einem Flexspline, der eine Flexspline-Verzahnung aufweist, wobei die Circularspline-Verzahnung und die Flexspline-Verzahnung an zwei bezogen auf die Rotationsmittelachse des Spannungswellengetriebes achsensymmetrisch gegenüberliegenden, umlaufenden Stellen miteinander in Zahneingriff stehen.

Die Erfindung betrifft außerdem ein Verfahren zum Herstellen der Verzahnung eines Zahnrades für ein solches Spannungswellengetriebe.

Ein Spannungswellengetriebe besitzt zumeist ein starres, kreisförmiges innenverzahntes Zahnrad (Circularspline) und ein flexibles außenverzahntes Zahnrad (Flexspline), das im Inneren des starren innenverzahnten Zahnrads angeordnet ist. In dem außenverzahnten Zahnrad ist ein elliptischer Wellengenerator mittels eines Wälzlagers drehbar angeordnet, der das flexible außenverzahnte Zahnrad zu einer zumeist elliptischen Form verformt, um die Verzahnungen des innenverzahnten Zahnrades und des flexiblen außenverzahnten Zahnrades an jedem Ende der Ellipsen-Hauptachse, also an zwei bezogen auf die Rotationsmittelachse des Spannungswellengetriebes achsensymmetrisch gegenüberliegenden Stellen, miteinander in Eingriff zu bringen. Wenn der Wellengenerator gedreht wird, gelangen die Zähne des flexiblen außenverzahnten Zahnrades an gegenüberliegenden Seiten umlaufend in und außer Eingriff mit den Zähnen des starren innenverzahnten Zahnrades, wobei sich die Zähne des außenverzahnten Zahnrades fortlaufend radial um wenigstens ihre Zahnhöhe bewegen.

Insbesondere Spannungswellengetriebe werden zumeist einstufig mit hohem Untersetzungsverhältnis ausgebildet, wobei sich das Untersetzungsverhältnis i für einen Antrieb über den Wellengenerator und einen Abtrieb über den Circularspline bauartbedingt nach der Gleichung: i = z_{H} / (z_{I} - z_{H}) errechnet, wobei z_{I} die Anzahl der Zähne des innenverzahntes Zahnrades und z_{H} die Anzahl der Zähne des außenverzahnten Zahnrades ist. Dies bedeutet, dass das Untersetzungsverhältnis eine Funktion der Zähnezahlen ist und dass ein umso größeres Untersetzungsverhältnis erzielbar ist, je mehr Zähne auf den Teilkreisen des außenverzahnten Zahnrades und des innenverzahnten Zahnrades angeordnet werden können.

Es gibt eine Vielzahl von Verfahren, um Zahnräder, insbesondere innen-oder außenverzahnte Zahnräder, herzustellen.

Beispielsweise ist das Herstellungsverfahren des Wälzschälens aus DE 243 514, DE 10 2008 037 514 A, DE 10 2005 049 528 A1 oder DE 10 2007 015 357 A1 bekannt. Das Wälzschälen ist eines von verschiedenen bekannten Verfahren zum Herstellen von Zahnrädern. Beim Wälzschälen wird die an einem Werkstück herzustellende Verzahnung mit einem Werkzeug-Zahnrad erzeugt, das Schneidkanten und eine zur herzustellenden Verzahnung komplementäre Verzahnung aufweist.

Hierzu werden das Werkstück und das Zahnrad an zueinander windschiefen Rotationsaxen positioniert und, insbesondere mit gleichsinniger Drehrichtung, synchron zueinander in Drehung versetzt. Die Schneidkanten des Werkzeug-Zahnrades führen hierbei aufgrund der windschiefen Stellung von Werkstück und Zahnrad in dem Werkstück eine Bewegung aus, die der Bewegung einer Baggerschaufel gleicht, wodurch die Verzahnung spanend hergestellt wird. Das rotierende Werkzeug-Zahnrad wird in einer bezogen auf das rotierende Werkstück axialen Vorschubrichtung relativ zu dem Werkstück bewegt, um die Verzahnung mittels der oben beschrieben Schneidbewegungen über die gewünschte Breite herzustellen. Allerdings ist es hierbei bereits äußerst problematisch, kleinmodulige Werkzeug-Zahnräder herzustellen. Die Herstellbarkeit kleinmoduliger Werkzeuge ist bisher fertigungstechnisch begrenzt. Beispielsweise sind einem Profilieren der Verzahnung mittels Schleifscheiben automatisch Grenzen gesetzt, weil die erforderlichen Schleifscheiben eine Mindestabmessung benötigen, um selbst ausreichend stabil zu sein, was mit der Anforderung eines kleinen Moduls kollidiert. Es müssen daher aufwändige Verfahren, wie beispielsweise Erodierverfahren und weitere Bearbeitungsverfahren eingesetzt werden, um kleinmodulige Werkzeug-Zahnräder in der erforderlichen Qualität zu fertigen.

Aus EP 2 839 914 A2 ist eine Zahnradbearbeitungsvorrichtung bekannt, bei der ein Bearbeitungswerkzeug und ein Werkstück mit einer hohen Geschwindigkeit synchron zueinander drehen, um ein hochgenaues Zahnrad durch Schneiden zu bearbeiten. Das Bearbeitungswerkzeug ist so hergestellt, dass jeder der Teilungen zwischen den Werkzeugschaufeln des Bearbeitungswerkzeugs ein ganzzahliges Vielfaches eines Abstandes zwischen den Zähnen des herzustellenden Zahnrades ist, wobei das ganzzahlige Vielfache gleich oder größer als das Doppelte ist. Es gibt jedoch Zahnräder, insbesondere innenverzahnte Zahnräder mit bestimmten Zähnezahlen, die sich mit der in dieser Druckschrift beschriebenen Herstellungsweise nicht herstellen lassen.

EP 2 745 970 A1 und aus EP 2 639 001 A1 offenbaren im Wesentlichen jeweils eine ähnliche Herstellungsweise mit denselben Nachteilen.

Es ist daher die Aufgabe der vorliegenden Erfindung ein Spannungswellengetriebe anzugeben, das hinsichtlich des akustischen Verhaltens verbessert ist.

Diese Aufgabe wird durch ein Spannungswellengetriebe gelöst, das dadurch gekennzeichnet ist, dass die Circularspline-Verzahnung und/oder die Flexspline-Verzahnung bezogen auf die Rotationsmittelachse des Spannungswellengetriebes nicht achsensymmetrisch ausgebildet sind.

Es ist eine weitere Aufgabe der vorliegen Erfindung, ein Verfahren anzugeben, mit dem auf einfache Weise die Verzahnung, die x Zähne und eine Zahnradteilung p aufweist, derartiger Zahnräder, insbesondere auch Zahnräder bei kleiner Zahnradteilung, hergestellt werden kann.

Diese Die Aufgabe wird durch ein Verfahren gelöst, das dadurch gekennzeichnet ist, dass von einem Zahnradrohling, der um eine erste Rotationsachse rotiert, Material mittels eines Werkzeugzahnrades abgetragen wird, das synchron zu dem Zahnradrohling um eine zweite Rotationsachse rotiert und das eine zur herzustellenden Verzahnung komplementäre Gegenverzahnung aufweist, wobei benachbarte Zähne der Gegenverzahnung auf dem Teilkreis jeweils um n·p (n multipliziert mit p) voneinander beabstandet sind und wobei n eine natürliche Zahl größer 1 ist.

In erfindungsgemäßer Weise wurde erkannt, dass die Geräuschentwicklung eines Spannungswellengetriebes reduziert werden kann, indem die Circularspline-Verzahnung und/oder die Flexspline-Verzahnung bezogen auf die Rotationsmittelachse des Spannungswellengetriebes nicht achsensymmetrisch ausgebildet sind. Auch bei einem solchen Spannungswellengetriebe stehen die Circularspline-Verzahnung und die Flexspline-Verzahnung an zwei bezogen auf die Rotationsmittelachse des Spannungswellengetriebes achsensymmetrisch gegenüberliegenden, umlaufenden Stellen umlaufend miteinander in Eingriff, jedoch erfolgt der Zahneingriff an den beiden Stellen auf Grund der Besonderheit, dass die Circularspline-Verzahnung und/oder die Flexspline-Verzahnung bezogen auf die Rotationsmittelachse des Spannungswellengetriebes nicht achsensymmetrisch ausgebildet sind, jeweils nicht genau gleichzeitig, sondern zeitlich nacheinander. Hierdurch sind die jeweils entstehenden Geräusche zueinander phasenversetzt. In vorteilhafter Weise erfolgt das Anregen von Schwingungen durch den Phasenversatz jeweils über einen längeren zeitlichen Verlauf, was zu einer geringeren Schwingungsamplitude und im Ergebnis zu einem leiser empfundenen Geräusch resultiert.

Insbesondere wenn die Verzahnung eines der beiden Zahnräder, Circularspline und Flexspline, bezogen auf die Rotationsmittelachse des Spannungswellengetriebes nicht achsensymmetrisch ausgebildet, während das andere der der beiden Zahnräder achsensymmetrisch ausgebildet, ist der Phasenversetz des umlaufenden Zahneingriffs an den achsensymmetrisch gegenüberliegenden Stellen besonders groß. Jedoch auch wenn sowohl die Flexspline-Verzahnung, als auch die Circularspline-Verzahnung bezogen auf die Rotationsmittelachse des Spannungswellengetriebes nicht achsensymmetrisch ausgebildet sind, gibt es eine Asymmetrie beim Zahneingriff und einen positiven Effekt im Hinblick auf die Geräuschentwicklung.

Bei einer vorteilhaften Ausführung ist Circularspline als innenverzahntes Hohlrad ausgebildet, während die Flexspline-Verzahnung eine Außenverzahnung ist.

Darüber hinaus kann vorteilhaft vorgesehen sein, dass die Circularspline-Verzahnung eine größere Anzahl von Zähnen aufweist, als die Flexspline-Verzahnung. Insbesondere kann vorteilhaft vorgesehen sein, dass Circularspline-Verzahnung zwei Zähne mehr aufweist, als die Flexspline-Verzahnung. Beispielsweise kann Circularspline-Verzahnung 101 Zähne aufweisen, während die Flexspline-Verzahnung 99 Zähne aufweist. Die Untersetzung eines solchen Getriebes beträgt i = 49,5.

Das erfindungsgemäße Spannungswellengetriebe kann vorteilhaft zusätzlich einen Dynamicspline mit einer Dynamicspline-Verzahnung aufweisen, wobei die Dynamicspline-Verzahnung mit der Flexspline-Verzahnung in Zahneingriff steht. Der Dynamicspline kann insbesondere dieselbe Anzahl an Zähnen aufweist, wie die Flexspline-Verzahnung. Außerdem kann der Dynamicspline vorteilhaft als innenverzahntes Hohlrad ausgebildet sein.

Auch die Dynamicspline-Verzahnung kann im Hinblick auf eine verringerte Geräuschentwicklung vorteilhaft bezogen auf die Rotationsmittelachse des Spannungswellengetriebes nicht achsensymmetrisch ausgebildet sein. Hierdurch wird vorteilhaft erreicht, dass der Zahneingriff an den beiden umlaufenden, achsensymmetrisch gegenüberliegenden Stellen jeweils nicht gleichzeitig, sondern zeitlich nacheinander erfolgt.

Im Sinne der vorliegenden Anmeldung ist eine Figur achsensymmetrisch, wenn sie durch die senkrechte Achsenspiegelungen an ihrer Symmetrieachse auf sich selbst abgebildet wird. Insoweit ist insbesondere ein Zahnrad achsensymmetrisch, dass durch senkrechte Achsenspiegelungen an seiner axialen Mittelachse auf sich selbst abgebildet wird. Insbesondere ist eine Verzahnung achsensymmetrisch, wenn jeder Zahn durch senkrechte Achsenspiegelung an der axialen Mittelachse auf einen Zahn und jede Zahnlücke durch senkrechte Achsenspiegelung an der axialen Mittelachse auf eine Zahnlücke abgebildet wird. Beispielsweise ist eine Verzahnung nicht achsensymmetrisch, wenn jeder Zahn durch senkrechte Achsenspiegelung an der axialen Mittelachse auf eine Zahnlücke und jede Zahnlücke durch senkrechte Achsenspiegelung an der axialen Mittelachse auf einen Zahn abgebildet wird.

Bei dem erfindungsgemäßen Verfahren werden bei einer vollständigen Umdrehung des Zahnradrohlings - anders, als bei dem bekannten Wälzschälverfahren - nicht sämtliche Zahnlücken der herzustellenden Verzahnung bearbeitet. Vielmehr werden zunächst bei der ersten Umdrehung erste Zahnlücken der Verzahnung wenigstens teilweise hergestellt und/oder bearbeitet, die um mehr als eine Zahnradteilung p voneinander beabstandet sind. Dies wird dadurch erreicht, dass benachbarte Zähne der Gegenverzahnung auf dem Teilkreis jeweils um n·p (n multipliziert mit p) voneinander beabstandet sind, wobei n eine natürliche Zahl größer 1 ist. Ganz allgemein kann vorteilhaft vorgesehen sein, dass die radialen Mittellinien benachbarter erster Zahnlücken auf dem Teilkreis jeweils um n·p voneinander beabstandet sind.

Hierbei ist es nicht erforderlich, dass die ersten Zahnlücken bereits bei der ersten Umdrehung des Zahnradrohlings vollständig hergestellt werden. Vielmehr kann vorteilhaft vorgesehen sein, dass bei weiteren n-1 Umdrehungen zunächst andere Zahnlücken der Verzahnung bearbeitet werden und dann bei der n-ten Umdrehung die Bearbeitung der ersten Zahnlücken fortgesetzt wird, und so fort.

Die Rotation des Zahnradrohlings und die dazu synchrone Rotation des Werkzeugzahnrades werden hierbei vorzugsweise nicht unterbrochen. Dies kann vorteilhaft dadurch erreicht werden, dass x und n teilerfremd sind. Durch die Bedingung, dass die Zähneanzahl x der herzustellenden Verzahnung und n teilerfremd sind, wird nämlich vorteilhaft erreicht, dass jeweils nach n Umdrehungen des Zahnradrohlings sämtliche herauszuarbeitende Zahnlücken von den Zähnen des Werkzeugzahnrades erreicht wurden. Dies insbesondere, ohne die Rotation des Zahnradrohlings und des Werkzeugzahnrades anzuhalten und die Relativdrehstellung des Zahnradrohlings zu dem Werkzeugzahnrad bei angehaltener Rotation zu verändern.

Alternativ ist es auch möglich, dass in einem ersten Bearbeitungsprozess eine Anzahl y, von äquidistant zueinander angeordneten ersten Zahnlücken der Verzahnung hergestellt wird, wobei gilt: x = n·y, wobei n eine natürliche Zahl größer 1 ist, und dass anschließend in n-1 zeitlich aufeinanderfolgenden weiteren Bearbeitungsprozessen, jeweils entlang dem Teilkreis um die Teilung der Verzahnung versetzt, räumlich zwischen den ersten Zahnlücken jeweils y weitere Zahnlücken erzeugt werden. Ein weiterer Bearbeitungsprozess kann insbesondere beinhalten, dass die Relativdrehstellung des Zahnradrohlings zu dem Werkzeug bei angehaltener Rotation verändert wird und anschließend räumlich zwischen den ersten Zahnlücken y weitere Zahnlücken erzeugt werden. Insbesondere kann vorgesehen sein, dass der weitere Bearbeitungsprozess solange wiederholt wird bis sämtliche x Zähne der Verzahnung hergestellt sind. Eine solche Ausführung des Verfahrens hat den besonderen Vorteil, dass insbesondere ein innenverzahnter Circularspline oder Dynamicspline ohne Beschränkung im Hinblick auf die Gesamtanzahl der Zähne herstellbar ist.

Das erfindungsgemäße Verfahren ermöglicht es, das Werkzeugzahnrad einfacher auszubilden, so dass es insbesondere weniger aufwendig hergestellt werden kann. Dies deshalb, weil die Gegenverzahnung des Werkzeugzahnrades deutlich weiter voneinander beabstandete Zähne aufweist, als ein üblicher Weise, beispielsweise beim Wälzschälen, verwendetes Werkzeugzahnrad.

Beispielsweise wird beim konventionellen Wälzschälen üblicher Weise ein Werkzeugzahnrad verwendet, bei dem benachbarte Zähne entlang dem Teilkreis denselben Abstand zueinander aufweisen, wie die Zähne der herzustellenden Verzahnung. Hingegen weist das erfindungsgemäße Werkzeugzahnrad, eine zur herzustellenden Verzahnung komplementäre Gegenverzahnung auf, deren Zähne entlang dem Teilkreis einen n-fach größeren Abstand zueinander aufweisen. Beispielsweise kann vorteilhaft vorgesehen sein, dass das Werkzeugzahnrad im Vergleich zu einem konventionell üblichen Werkzeugzahnrad lediglich den ersten, vierten, siebten usw. Zahn aufweist, was dem Fall n= 3 entspricht, und die Zähne, die bei einem konventionell üblichen Werkzeugzahnrad dazwischen liegen würden, weggelassen sind. Auf diese Weise ist es vorteilhaft ermöglicht, das erfindungsgemäße Werkzeugzahnrad - auch bei sehr kleiner Zahnradteilung p - mit konventioneller Schleiftechnik herstellen zu können, weil der Zwischenraum zwischen den Zähnen des erfindungsgemäßen Werkzeugzahnrades auch mit relativ dicken Schleifscheiben erreicht werden kann.

Im Sinne der vorliegenden Anmeldung sind x und n teilerfremd, wenn es keine natürliche Zahl außer Eins gibt, die sowohl x, als auch n teilt.

Um die Verzahnung mit möglichst wenigen Umdrehungen herstellen zu können, wird bei einer vorteilhaften Ausführung des erfindungsgemäßen Verfahrens für n die kleinste Zahl aus der Menge aller mit x teilerfremden Zahlen gewählt. Insbesondere kann vorteilhaft vorgesehen sein, dass für n eine natürliche Zahl kleiner 8, insbesondere eine natürliche Zahl kleiner 6, gewählt wird.

Wie bereits erwähnt, kann die Erfindung beispielsweise in der Weise realisiert werden, dass das herzustellende Zahnrad durch Wälzschälen - jedoch mit einem erfindungsgemäßen Werkzeugzahnrad - hergestellt wird. Insbesondere kann vorteilhaft vorgesehen sein, dass die Verzahnung durch Wälzschälen hergestellt wird, wobei jeder Zahn der Gegenverzahnung eine Schneidkante aufweist, um Material von dem Zahnrahrohling abzuschälen.

Allerdings ist die vorliegende Erfindung auch mit anderen spanenden Herstellungsverfahren umsetzbar. Alternativ zu einem Wälzschälen ist es beispielsweise auch möglich, die Verzahnung des Zahnrades durch Wälzschälschleifen herzustellen, wobei unter Wälzschälschleifen ein schleifendes Verfahren verstanden wird, bei dem bei ähnlicher Kinematik und bei ähnlicher Anordnung von Zahnradrohling und Werkzeugzahnrad wie beim Wälzschälen eine schleifende Bearbeitung mit einem Werkzeugzahnrad erfolgt, dessen Zähne anstelle von Schneidkanten eine abrasive Oberfläche aufweisen, um Material von dem Zahnrahrohling abzuschleifen.

Es ist in vorteilhafter Weise auch möglich, die Verzahnung zunächst durch Wälzschälen in der oben beschriebenen Weise in einem Rohzustand, insbesondere mit einem Aufmaß, zu erzeugen und anschließend durch Wälzschälschleifen, beispielsweise unter Verwendung eines weiteren, erfindungsgemäßen Werkzeugzahnrades, das speziell zum Wälzschälschleifen ausgebildet ist, nachzubearbeiten. Von ganz besonderem Vorteil ist eine Ausführung, bei der die Verzahnung zunächst durch Wälzschälen erzeugt wird und bei der die Verzahnung nach einem Härteprozess durch Wälzschälschleifen nachbearbeitet wird. Diese Ausführung ist besonders vorteilhaft, weil die beim Härten durch Verziehen des Materials auftretenden Maßabweichungen durch das nachfolgende Wälzschälschleifen korrigiert werden können. Insbesondere kann vorteilhaft vorgesehen sein, dass die Verzahnung unter Verwendung des Werkzeugzahnrades durch Wälzschälen zunächst erzeugt wird und anschließend unter Verwendung eines weiteren Werkzeugzahnrades durch Wälzschälschleifen nachbearbeitet wird, wobei Material mittels des weiteren Werkzeugzahnrades abgeschliffen wird, das synchron zu dem Zahnradrohling um eine zweite Rotationsachse rotiert und das eine zur herzustellenden Verzahnung komplementäre Gegenverzahnung aufweist, wobei benachbarte Zähne der Gegenverzahnung auf dem Teilkreis jeweils um n·p (n multipliziert mit p) voneinander beabstandet sind und wobei n eine natürliche Zahl größer 1 ist und wobei x und n teilerfremd sind.

Vorzugsweise sind die erste Rotationsachse und die zweite Rotationsachse zueinander windschief angeordnet.

Bei einer besonderen Ausführung ist zur Realisierung der erforderlichen Synchronität der Rotation von Zahnradrohling und Werkzeugzahnrad vorgesehen, dass das Verhältnis der Drehzahlen von Zahnradrohling und Werkzeugzahnrad dem Verhältnis der Teilkreisdurchmesser von Werkzeugzahnrad und Zahnradrohling entspricht, so dass gilt Uz/Uw = Dw/Dz, wobei Uz die Drehzahl des Zahnradrohlings, Uw die Drehzahl des Werkzeugzahnrades, Dw der Teilkreisdurchmesser des Werkzeugzahnrades und Dz der Teilkreisdurchmesser des Zahnradrohlings ist.

Insbesondere zur Herstellung eines innenverzahnten Zahnrades ist es besonders vorteilhaft, wenn der Außendurchmesser des Werkzeugzahnrades kleiner ist, als der Innendurchmesser des Zahnradrohlings und/oder wenn der Teilkreisdurchmesser des Werkzeugzahnrades kleiner ist, als der Teilkreisdurchmesser des Zahnradrohlings.

Insbesondere wird das Verfahren vorzugsweise so ausgeführt, dass der jeweils bereits hergestellte Teil der Verzahnung und die Gegenverzahnung während der Rotation des Zahnradrohlings und Werkzeugzahnrades miteinander kämmen.

Unter der Zahnradteilung wird die Länge des Bogens auf dem Teilkreis zwischen zwei benachbarten gleichnamigen Zahnflanken (Rechts- oder Linksflanken) verstanden.

Wie bereits angesprochen kann vorteilhaft vorgesehen sein, dass bei einer ersten Umdrehung des Zahnradrohlings erste Zahnlücken der Verzahnung wenigstens teilweise hergestellt und/oder bearbeitet werden und dass bei einer unmittelbar nachfolgenden, zweiten Umdrehung des Zahnradrohlings zwischen den ersten Zahnlücken zweite Zahnlücken der Verzahnung hergestellt und/oder bearbeitet werden. Alternativ oder zusätzlich ist es auch möglich, dass bei jeder von n aufeinanderfolgenden Umdrehungen des Zahnradrohlings jeweils eine andere Gruppe Zahnlücken der Verzahnung wenigstens teilweise hergestellt und/oder bearbeitet werden.

Das erfindungsgemäße Verfahren wird vorteilhaft so ausgeführt, dass bei jeder von n aufeinanderfolgenden Umdrehungen des Zahnradrohlings jeweils eine andere Gruppe von, insbesondere 1+(x/n - x mod n), Zahnlücken der Verzahnung wenigstens teilweise hergestellt und/oder bearbeitet werden, wobei die Rotation des Zahnradrohlings und des Werkzeugzahnrads beim Übergang von einer Gruppe zur nächsten Gruppe nicht unterbrochen wird, und/oder derart, dass nach n Umdrehungen des Zahnradrohlings sämtliche Zahnlücken der Verzahnung wenigstens teilweise hergestellt und/oder bearbeitet sind. Dann wird - vorzugsweise ohne ein Anhalten der Bearbeitung - automatisch wieder die erste Gruppe weiter hergestellt und so fort, bis die gesamte Verzahnung vollständig hergestellt ist.

Beispielsweise beim Wälzschälen oder beim Wälzschälschleifen kann der Vorschub des Werkzeugs in Richtung der ersten Rotationsachse im Vergleich zu dem herkömmlichen Wälzschälprozess oder Wälzschälschleifprozess vorteilhaft, insbesondere um den Faktor n, reduziert sein. Auf Weise wird erreicht, dass bei jedem einzelnen Schäloder Schleifvorgang genauso viel Material abgenommen wird, wie bei den einzelnen Schäl- oder Schleifvorgängen beim herkömmlichen Wälzschälprozess oder Wälzschälschleifprozess.

Vorzugsweise wird das erfindungsgemäße Verfahren vorteilhaft so ausgeführt, dass die gesamte Verzahnung hergestellt wird, ohne die Rotation des Zahnradrohlings und/oder die Rotation des Werkzeugzahnrads zu unterbrechen.

Vorzugsweise ist jeweils der Raum zwischen benachbarten Zähnen des Werkzeugzahnrades ein Freiraum. Dieser Freiraum kann vorteilhaft insbesondere in konventioneller Schleiftechnik hergestellt und bearbeitet werden. Obwohl das Werkzeugzahnrad, wie oben ausführlich beschrieben, dazu ausgebildet sein kann, sehr kleinmodulige Verzahnungen herzustellen, kann es selber auf diese Weise unaufwändig und vergleichsweise kostengünstig hergestellt werden. Dies insbesondere mit Schleifscheiben, deren axiale Abmessung deutlich größer ist, als die Zahnbreite der herzustellenden Verzahnung.

Vorzugsweise weisen die Zähne der Gegenverzahnung des Werkzeugs, insbesondere abgesehen von etwaig vorhandenen Schneidkanten und/oder insbesondere wenigstens in einer zur Axialrichtung senkrechten Querschnittsebene, dieselbe Form und/oder dieselbe Größe auf, wie die Zähne der herzustellenden Verzahnung.

In vorteilhafter Weise kann vorgesehen sein, dass die Gegenverzahnung, zumindest abschnittweise, insbesondere vollständig, eine Evolventenverzahnung ist und/der zur Herstellung einer zumindest abschnittweisen, insbesondere vollständigen, Evolventenverzahnung ausgebildet ist.

Von ganz besonderem Vorteil ist ein Zahnrad, das nach dem erfindungsgemäßen Verfahren und/oder unter Verwendung eines erfindungsgemäßen Werkzeugszahnrades hergestellt ist. Die Erfindung ermöglicht es in vorteilhafter Weise, ein solches Zahnrad bei vergleichsweise niedrigem Aufwand, insbesondere kostengünstig, und bei hoher Qualität und Maßgenauigkeit herzustellen.

Insbesondere kann das mit dem erfindungsgemäßen Verfahren und/oder unter Verwendung eines erfindungsgemäßen Werkzeugs hergestellte Zahnrad ein Modul (Modul = Zahnradteilung dividiert durch π) aufweisen, der kleiner als 0,5 mm ist oder der insbesondere sogar kleiner als 0,25 mm oder der kleiner als 0,15 mm ist.

In ganz besonders vorteilhafter Weise kann es sich bei dem Zahnrad um ein Hohlrad mit einer Innenverzahnung, beispielsweise für ein Spannungswellengetriebe, handeln.

Ganz allgemein kann das Zahnrad vorteilhaft als Circular-Spline oder als Dynamic-Spline oder als Flexspline für ein Spannungswellengetriebe ausgebildet sein. Alternativ ist es auch möglich, dass das Zahnrad als Teil eines Circular-Spline oder als Teil eines Dynamic-Spline oder als Teil eins Flexspline für ein Spannungswellengetriebe ausgebildet ist.

Ein Spannungswellengetriebe, das mit wenigstens einem Zahnrad ausgerüstet ist, welches nach dem erfindungsgemäßen Verfahren und/oder unter Verwendung des erfindungsgemäßen Werkzeugs hergestellt ist, hat neben einer vergleichsweise sehr kostengünstigen Herstellbarkeit den ganz besonderen Vorteil, dass es ein im Verhältnis zu seiner Baugröße großes Untersetzungsverhältnis aufweisen kann. Derartige Spannungswellengetriebe können vorteilhaft beispielsweise in Robotern, insbesondere in gelenkigen Verbindungen der Roboterarme, eingesetzt werden. Von besonderem Vorteil ist auch der Einsatz derartiger Spannungswellengetriebe in einem Fahrzeug, insbesondere in einem Kraftfahrzeug. Besonders vorteilhaft ist die Verwendung derartiger Spannungswellengetriebe in Stellaktuatoren eines Kraftfahrzeugs, beispielsweise in einem aktiven Fahrwerk, einer Überlagerungs- und/oder Servolenkung, einem Nockenwellenversteller, in einem Versteller zum Verstellen des Expansionshubes eines Verbrennungsmotors oder einem Bremssystem, insbesondere einer Feststellbremse.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch ein Ausführungsbeispiel eines Circularspline für ein erfindungsgemäßes Spannungswellengetriebe,
- Fig. 2: schematisch ein Ausführungsbeispiel eines Flexspline für ein anderes, erfindungsgemäßes Spannungswellengetriebe,
- Fig. 3: schematisch das Herstellen der Verzahnung eines Zahnrades im Wälzschälverfahren nach dem Stand der Technik, und
- Fig. 4: die Illustration eines Ausführungsbeispiels des erfindungsgemäßen Verfahrens.

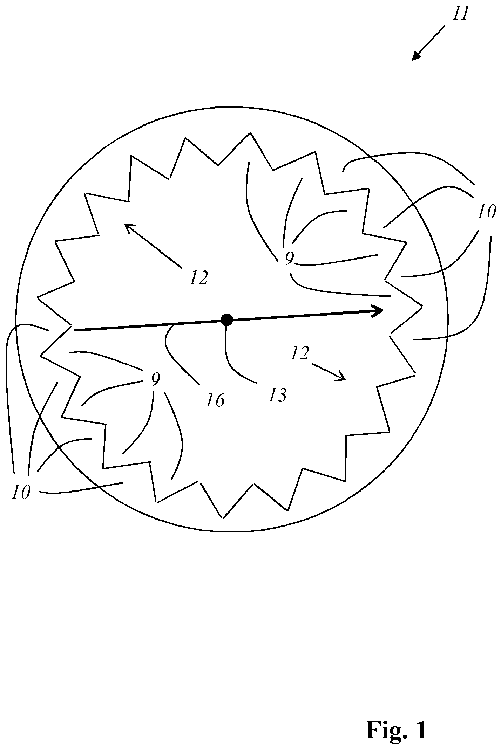

Fig. 1 zeigt ganz schematisch ein Ausführungsbeispiel eines Circularspline 11 für ein erfindungsgemäßes Spannungswellengetriebe. Der Circularspline 11 ist als innenverzahntes Hohlrad ausgebildet und weist eine Circularspline-Verzahnung 12 auf. Die Circularspline-Verzahnung 12 ist bezogen auf die axiale Mittelachse des Circularspline 11, die senkrecht auf der Zeichenebene steht und die der Rotationsmittelachse 13 des Spannungswellengetriebes entspricht, in das der Circularspline 11 eingebaut wird, nicht achsensymmetrisch ausgebildet.

Der Circularspline 11 wäre achsensymmetrisch, wenn er durch senkrechte Achsenspiegelungen an der Rotationsmittelachse 13, die senkrecht auf der Zeichenebene steht, auf sich selbst abgebildet würde, was bei dem in Figur 1 gezeigten Ausführungsbeispiel eines erfindungsgemäßen Circularsplines 11 nicht der Fall ist. Vielmehr ist zu erkennen, dass jeder Zahn 10 durch senkrechte Achsenspiegelung an der Rotationsmittelachse 13 auf eine Zahnlücke 9 und jede Zahnlücke 9 durch senkrechte Achsenspiegelung an der Rotationsmittelachse 13 auf einen Zahn 10 abgebildet wird, was der Pfeil 16 beispielhaft für einen Zahn 10 und die achsensymmetrisch gegenüberliegende Lücke 9 andeutet.

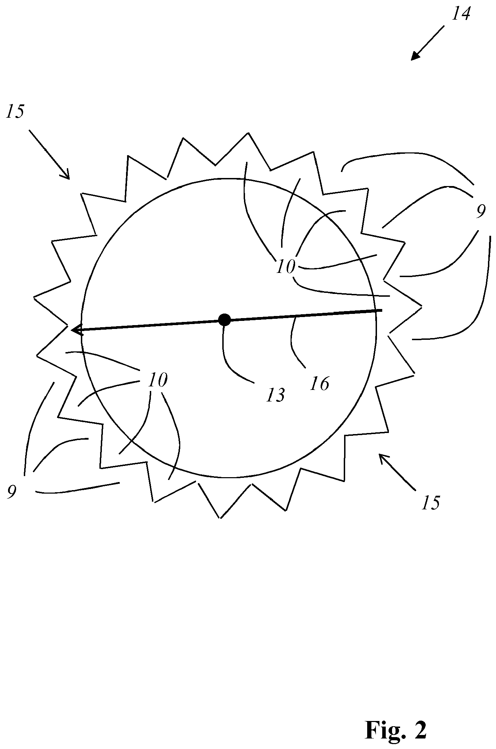

Fig. 2 zeigt ganz schematisch ein Ausführungsbeispiel eines Flexsplines 14 für ein anderes, erfindungsgemäßes Spannungswellengetriebe. Der Flexspline 14 ist als außenverzahntes, radialflexibles Zahnrad ausgebildet und weist eine Flexspline-Verzahnung 15 auf. Die Flexspline-Verzahnung 15 ist bezogen auf die axiale Mittelachse des Circularspline, die senkrecht auf der Zeichenebene steht und die der Rotationsmittelachse 13 des Spannungswellengetriebes entspricht, in das der Flexspline 14 eingebaut wird, nicht achsensymmetrisch ausgebildet.

Der Flexspline 14 wäre achsensymmetrisch, wenn er durch senkrechte Achsenspiegelungen an der Rotationsmittelachse 13, die senkrecht auf der Zeichenebene steht, auf sich selbst abgebildet würde, was bei dem in Figur 1 gezeigten Ausführungsbeispiel eines erfindungsgemäßen Flexsplines 14 nicht der Fall ist. Vielmehr ist zu erkennen, dass jeder Zahn 10 des Flexspline 14 durch senkrechte Achsenspiegelung an der Rotationsmittelachse 13 auf eine Zahnlücke 9 und jede Zahnlücke 9 durch senkrechte Achsenspiegelung an der Rotationsmittelachse 13 auf einen Zahn 10 abgebildet wird, was der Pfeil 16 beispielhaft für einen Zahn 10 und die achsensymmetrisch gegenüberliegende Lücke 9 andeutet.

Vorzugsweise wird der Flexspline 14 auf den Außenring eines durch einen elliptischen Antriebskern elliptisch verformten Wälzlagers aufgezogen und auf diese Weise selbst in eine elliptische Form gebracht.

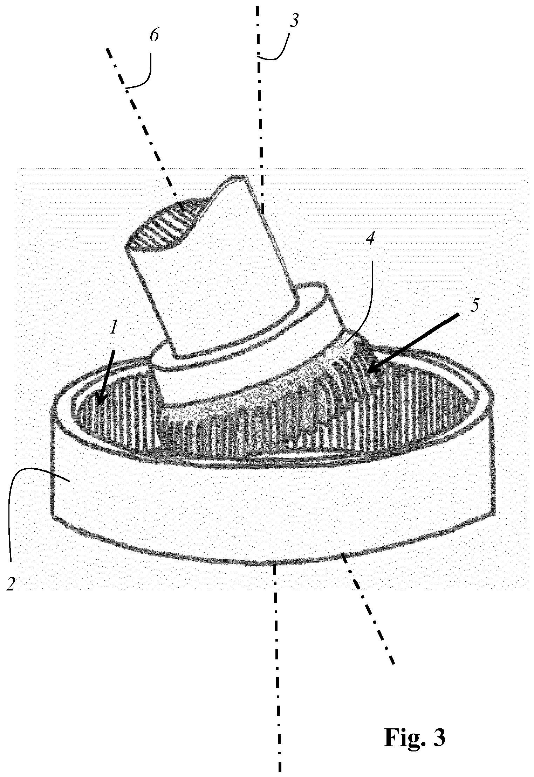

Fig. 3 illustriert schematisch das Herstellen der Verzahnung 1, die eine Gesamtanzahl von x Zähnen, beispielsweise 101 Zähnen, und eine Zahnradteilung p aufweist, eines Zahnrades 2 aus einem Zahnradrohling im Wälzschälverfahren nach dem Stand der Technik. Der Zahnradrohling, der zu Beginn keine Zähne aufweist, rotiert um eine erste Rotationsachse 3, während ein Werkzeug-Zahnrad 4, das eine zur herzustellenden Verzahnung komplementäre Gegenverzahnung 5 aufweist, synchron zur Rotation des Zahnradrohling um eine zweite Rotationsachse 6 rotiert, wobei die erste Rotationsachse 3 und die zweite Rotationsachse 6 zueinander windschief sind, und wobei sich das Werkzeugzahnrad 4 parallel zur ersten Rotationsachse 3 bewegt, während der jeweils bereits hergestellte Teil der Verzahnung 1 des rotierenden Zahnradrohlings und die Gegenverzahnung 5 des rotierenden Schleifwerkzeuges 4 der miteinander kämmen.

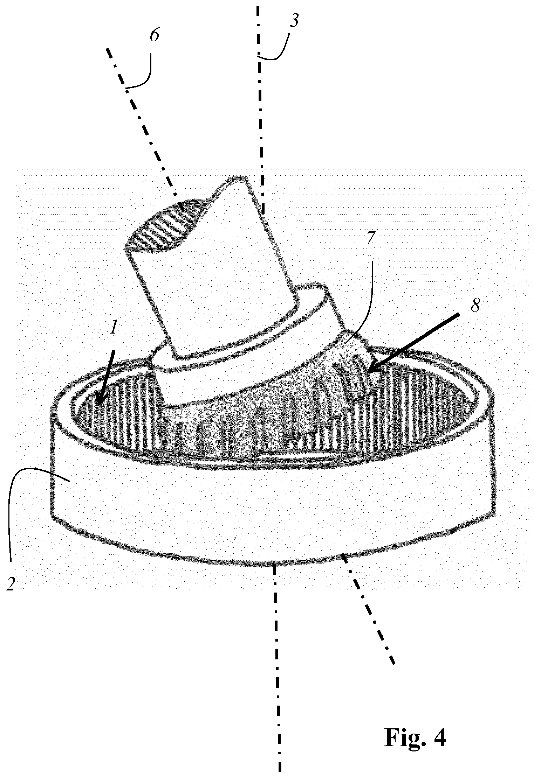

Fig. 4 illustriert ein Ausführungsbeispiel in Bezug auf das erfindungsgemäße Verfahren zum Herstellen der Verzahnung 1 eines Zahnrades 2.

Bei diesem Ausführungsbeispiel weist die Gegenverzahnung 8 des erfindungsgemäßen Werkzeugzahnrades 7 - im Vergleich zu dem in Fig. 1 dargestellten Werkzeugzahnrad 4 nach dem Stand der Technik - nur die halbe Anzahl von Zähnen auf. Jeweils unmittelbar benachbarte Zähne der Gegenverzahnung weisen daher auf dem Teilkreis einen Abstand von n·p (n multipliziert mit p) zueinander auf, wobei in diesem Fall n gleich 2 ist. 101 und 2 sind teilerfremd. Der Raum zwischen benachbarten Zähnen des Werkzeugzahnrades 7 ist ein Freiraum.

Bei einer ersten Umdrehung des Zahnradrohlings werden zunächst erste Zahnlücken der Verzahnung 1 teilweise hergestellt, die um n·p (n multipliziert mit p), also im vorliegenden Fall um 2p voneinander beabstandet sind. Es werden also bei der ersten Umdrehung die 1., 3., 5. ... 99. und 101. Zahnlücke teilweise hergestellt. Bei der zweiten Umdrehung des Zahnradrohlings werden zweite Zahnlücken zwischen den ersten Zahnlücken teilweise hergestellt, nämlich die 2, 4., 6.... 98. und 100. Zahnlücke. Bei der dritten Umdrehung werden die ersten Zahnlücken weiter hergestellt, bei der vierten Umdrehung die zweiten Zahnlücken und so fort, bis die gesamte Verzahnung 1 vollständig hergestellt ist. Die Rotation des Zahnradrohlings und des Werkzeugzahnrades 7 wird bis zur vollständigen Herstellung der Verzahnung vorzugsweise nicht angehalten.

Im Vergleich zum dem Herstellungsverfahren nach dem Stand der Technik wird die doppelte (allgemein: n-fache) Zahl von Umdrehungen des Zahnradrohlings benötigt, um die Verzahnung 1 vollständig herzustellen. Allerdings hat das erfindungsgemäße Verfahren den ganz besonderen Vorteil, dass das Werkzeugzahnrad 7 - auch bei sehr kleiner Zahnradteilung p - einfacher, beispielsweise mit konventioneller Schleiftechnik herstellt werden kann, weil der Freiraum zwischen den Zähnen der Verzahnung 8 des erfindungsgemäßen Werkzeugzahnrades 7 auch mit relativ dicken Schleifscheiben erreicht werden kann.

### Bezugszeichenliste:

- 1: Herzustellende Verzahnung
- 2: Zahnrad
- 3: Erste Rotationsachse
- 4: Werkzeugzahnrad (Stand der Technik)
- 5: Gegenverzahnung des Werkzeugzahnrades 4
- 6: Zweite Rotationsachse
- 7: Ausführungsbeispiel eines erfindungsgemäßen Werkzeugzahnrades
- 8: Gegenverzahnung des Werkzeugzahnrades 7
- 9: Zahnlücke
- 10: Zahn
- 11: Circularspline
- 12: Circularspline-Verzahnung
- 13: Rotationsmittelachse (senkrecht zur Zeichenebene)
- 14: Flexspline
- 15: Flexspline-Verzahnung
- 16: Pfeil

## Patentansprüche

1. Spannungswellengetriebe mit einem Circularspline, der eine Circularspline-Verzahnung aufweist, und einem Flexspline, der eine Flexspline-Verzahnung aufweist, wobei die Circularspline-Verzahnung und die Flexspline-Verzahnung an zwei bezogen auf die Rotationsmittelachse des Spannungswellengetriebes achsensymmetrisch gegenüberliegenden, umlaufenden Stellen miteinander in Zahneingriff stehen, **dadurch gekennzeichnet, dass** die Circularspline-Verzahnung und/oder die Flexspline-Verzahnung bezogen auf die Rotationsmittelachse des Spannungswellengetriebes nicht achsensymmetrisch ausgebildet sind.

2. Spannungswellengetriebe nach Anspruch 1, **dadurch gekennzeichnet, dass** der Circularspline als innenverzahntes Hohlrad ausgebildet ist und dass der die Flexspline-Verzahnung eine Außenverzahnung ist.

3. Spannungswellengetriebe nach Anspruch 1 oder 2, **dadurch gekennzeichnet, dass**
a. die Circularspline-Verzahnung eine größere Anzahl von Zähnen aufweist, als die Flexspline-Verzahnung, oder dass
b. die Circularspline-Verzahnung insgesamt x Zähne aufweist und dass die Flexspline-Verzahnung x - 2 Zähne aufweist.

4. Spannungswellengetriebe nach einem der Ansprüche 1 bis 3, **dadurch gekennzeichnet, dass** ein Dynamicspline mit einer Dynamicspline-Verzahnung vorhanden ist, wobei die Dynamicspline-Verzahnung mit der Flexspline-Verzahnung in Zahneingriff steht.

5. Spannungswellengetriebe nach Anspruch 4, **dadurch gekennzeichnet, dass** die Dynamicspline-Verzahnung bezogen auf die Rotationsmittelachse des Spannungswellengetriebes nicht achsensymmetrisch ausgebildet ist.

6. Spannungswellengetriebe nach Anspruch 4 oder 5, **dadurch gekennzeichnet, dass**
a. die Dynamicspline-Verzahnung dieselbe Anzahl an Zähnen aufweist, wie die Flexspline-Verzahnung, und/oder dass
b. der Dynamicspline als innenverzahntes Hohlrad ausgebildet ist.

7. Roboter, der wenigstens ein Spannungswellengetriebe nach einem der Ansprüche 1 bis 6 aufweist, oder Fahrzeug, insbesondere Kraftfahrzeug, das wenigstens ein Spannungswellengetriebe nach einem der Ansprüche 1 bis 6 aufweist.

8. Verfahren zum Herstellen der Verzahnung eines Zahnrades eines Spannungswellengetriebes nach einem der Ansprüche 1 bis 6, wobei die Verzahnung x Zähne und eine Zahnradteilung p aufweist und die Flexspline-Verzahnung oder die Circularspline-Verzahnung oder die Dynamicspline-Verzahnung des Spannungswellengetriebes ist, **dadurch gekennzeichnet, dass** von einem Zahnradrohling, der um eine erste Rotationsachse rotiert, Material mittels eines Werkzeugzahnrades abgetragen wird, das synchron zu dem Zahnradrohling um eine zweite Rotationsachse rotiert und das eine zur herzustellenden Verzahnung komplementäre Gegenverzahnung aufweist, wobei benachbarte Zähne der Gegenverzahnung auf dem Teilkreis jeweils um n·p (n multipliziert mit p) voneinander beabstandet sind und wobei n eine natürliche Zahl größer 1 ist.

9. Verfahren nach Anspruch 8, **dadurch gekennzeichnet, dass** x und n teilerfremd sind.

10. Verfahren nach Anspruch 9, **dadurch gekennzeichnet, dass**
a. für n eine natürliche Zahl kleiner 8, insbesondere eine natürliche Zahl kleiner 6, gewählt wird, und/oder dass
b. für n die kleinste Zahl aus der Menge aller mit x teilerfremden Zahlen gewählt wird.

11. Verfahren nach einem der Ansprüche 8 bis 10, **dadurch gekennzeichnet, dass**
a. die Verzahnung durch Wälzschälen hergestellt wird oder dass
b. die Verzahnung durch Wälzschälen hergestellt wird, wobei jeder Zahn der Gegenverzahnung eine Schneidkante aufweist, um Material von dem Zahnrahrohling abzuschälen, oder dass
c. die Verzahnung durch Wälzschälschleifen hergestellt wird, oder dass
d. die Verzahnung durch Wälzschälschleifen hergestellt wird, wobei jeder Zahn der Gegenverzahnung eine abrasive Oberfläche aufweist, um Material von dem Zahnrahrohling abzuschleifen.

12. Verfahren nach einem der Ansprüche 8 bis 11, **dadurch gekennzeichnet, dass**
a. die Verzahnung durch Wälzschälen zunächst erzeugt wird und anschließend durch Wälzschälschleifen nachbearbeitet wird, oder dass
b. die Verzahnung durch Wälzschälen zunächst erzeugt wird und anschließend gehärtet und dann anschließend durch Wälzschälschleifen nachbearbeitet wird, oder dass
c. die Verzahnung unter Verwendung des Werkzeugzahnrades durch Wälzschälen zunächst erzeugt wird und anschließend unter Verwendung eines weiteren Werkzeugzahnrades durch Wälzschälschleifen nachbearbeitet wird, oder dass
d. die Verzahnung unter Verwendung des Werkzeugzahnrades durch Wälzschälen zunächst erzeugt wird und anschließend unter Verwendung eines weiteren Werkzeugzahnrades durch Wälzschälschleifen nachbearbeitet wird, wobei Material mittels des weiteren Werkzeugzahnrades abgeschliffen wird, das synchron zu dem Zahnradrohling um eine zweite Rotationsachse rotiert und das eine zur herzustellenden Verzahnung komplementäre Gegenverzahnung aufweist, wobei benachbarte Zähne der Gegenverzahnung auf dem Teilkreis jeweils um n·p (n multipliziert mit p) voneinander beabstandet sind und wobei n eine natürliche Zahl größer 1 ist und wobei x und n teilerfremd sind.

13. Verfahren nach einem der Ansprüche 8 bis 12, **dadurch gekennzeichnet, dass**
a. die erste Rotationsachse und die zweite Rotationsachse zueinander windschief angeordnet sind und/oder dass
b. das Verhältnis der Drehzahlen von Zahnradrohling und Werkzeugzahnrad dem Verhältnis der Teilkreisdurchmesser von Werkzeugzahnrad und Zahnradrohling entspricht, und/oder dass
c. der jeweils bereits hergestellte Teil der Verzahnung und die Gegenverzahnung während der Rotation des Zahnradrohlings und Werkzeugzahnrades miteinander kämmen.

14. Verfahren nach einem der Ansprüche 8 bis 13, **dadurch gekennzeichnet, dass**
a. bei einer ersten Umdrehung des Zahnradrohlings erste Zahnlücken der Verzahnung wenigstens teilweise hergestellt und/oder bearbeitet werden und dass bei einer unmittelbar nachfolgenden, zweiten Umdrehung des Zahnradrohlings zwischen den ersten Zahnlücken zweite Zahnlücken der Verzahnung hergestellt und/oder bearbeitet werden, und/oder dass
b. bei jeder von n aufeinanderfolgenden Umdrehungen des Zahnradrohlings jeweils eine andere Gruppe Zahnlücken der Verzahnung wenigstens teilweise hergestellt und/oder bearbeitet werden, und/oder dass
c. bei jeder von n aufeinanderfolgenden Umdrehungen des Zahnradrohlings jeweils eine andere Gruppe von Zahnlücken der Verzahnung wenigstens teilweise hergestellt und/oder bearbeitet werden, wobei die Rotation des Zahnradrohlings und des Werkzeugzahnrads beim Übergang von einer Gruppe zur nächsten Gruppe nicht unterbrochen wird, und/oder dass
d. nach n Umdrehungen des Zahnradrohlings sämtliche Zahnlücken der Verzahnung wenigstens teilweise hergestellt und/oder bearbeitet sind, und/oder dass
e. die gesamte Verzahnung hergestellt wird, ohne die Rotation des Zahnradrohlings und/oder die Rotation des Werkzeugzahnrads zu unterbrechen.

15. Verfahren nach einem der Ansprüche 8 bis 14, **dadurch gekennzeichnet, dass**
a. die Verzahnung eine Evolventenverzahnung ist, und/oder dass
b. die Verzahnung wenigstens einen evolventischen Abschnitt aufweist, und/oder dass
c. die Verzahnung eine Innenverzahnung ist.
